Europäisches Patentamt

European Patent Office

Office européen des brevets

(19)

(11) EP 0 676 056 B1

(12) **FASCICULE DE BREVET EUROPEEN**

(45) Date de publication et mention
de la délivrance du brevet:
**06.11.1996 Bulletin 1996/45**

(51) Int Cl.⁶: **G01S 5/00**, G01S 5/14,
G01S 11/14

(21) Numéro de dépôt: **94900899.9**

(86) Numéro de dépôt international:
**PCT/FR93/01186**

(22) Date de dépôt: **03.12.1993**

(87) Numéro de publication internationale:
**WO 94/14081 (23.06.1994 Gazette 1994/14)**

(54) **PROCEDE ET DISPOSITIF DE CONTROLE ET DE COMMANDE A DISTANCE D'ENGINS MOBILES SOUS-MARINS INHABITES**

**VERFAHREN UND VORRICHTUNG FÜR DIE FERNSTEUERUNG UND ÜBERWACHUNG VON UNBEMANNTEN UNTERWASSERFAHRZEUGEN**

**METHOD AND DEVICE FOR REMOTELY CONTROLLING AND MONITORING MANNED SUBMERSIBLES**

(84) Etats contractants désignés:
**AT BE CH DE DK ES FR GB GR IE IT LI LU MC NL PT SE**

(30) Priorité: **17.12.1992 FR 9215667**

(43) Date de publication de la demande:
**11.10.1995 Bulletin 1995/41**

(73) Titulaire: **THOMAS, Hubert**
**F-13100 Le Tholonnet (FR)**

(72) Inventeur: **THOMAS, Hubert**
**F-13100 Le Tholonnet (FR)**

(74) Mandataire: **Marek, Pierre, Cabinet Marek**
**28, rue de la Loge**
**13235 Marseille Cédex 02 (FR)**

(56) Documents cités:
**FR-A- 2 643 463**          **GB-A- 2 247 379**
**US-A- 4 315 326**          **US-A- 4 622 557**
**US-A- 5 119 341**

• **NAVIGATION vol. 40, no. 159 , Juillet 1992 , FR pages 305 - 315 YOUNGBERG 'Un nouveau procédé pour l'utilisation sous-marine du GPS.' cité dans la demande**

**Description**

La présente invention a pour objet un procédé et un dispositif de contrôle et de commande à distance d'engins mobiles sous-marins partiellement autonomes inhabités.

Le domaine technique de l'invention est celui des systèmes de positionnement et de guidage acoustiques sous-marins.

On connaît déjà différents systèmes de détermination de la position d'un objet sous marin qui utilisent notamment des signaux acoustiques.

Le brevet FR 2 643 463 (SOFTWARE BASED SYSTEM) décrit un procédé et un dispositif de positionnement absolu d'un engin sous-marin émettant des signaux acoustiques ; ce système utilise deux navires qui sont positionnés par rapport à un référentiel absolu, dont l'un reçoit des signaux en provenance du référentiel absolu, de l'engin sous-marin et de l'autre navire ; selon le procédé décrit dans ce document, on recueille sur l'un des navires les informations déduites des signaux reçus concernant en particulier les positions absolues des deux navires et leurs positions relatives et l'on calcule la position absolue et relative par rapport à l'un des navires de l'engin sous-marin en fonction des signaux acoustiques émis par l'engin sous marin et reçus par les deux navires.

Le système décrit dans ce document permet à un opérateur situé sur l'un des deux navires de connaître la position de l'engin sous-marin, mais n'est pas destiné à permettre à l'engin sous-marin de connaître sa propre position. Le problème général posé consiste à procurer un système permettant à un dispositif de contrôle déporté de connaître la position d'engins sous-marins et de permettre également aux objets sous-marins de connaître avec précision à chaque instant leurs consignes de trajectoire dans un référentiel absolu ou relatif au théâtre d'opération.

On connaît par ailleurs par la publication "un nouveau procédé pour l'utilisation sous-marine du GPS", J. W. YOUNGBERG, Navigation n° 159, Juillet 1992, et par le brevet US 5 119 341 (Youngberg), un système permettant de fournir un service de navigation à des sous-marins autonomes; le système comporte des bouées errantes qui traduisent les signaux radio-électriques du GPS en signaux acoustiques se propageant dans l'eau, de sorte que le sous marin autonome recevant les signaux acoustiques émis par les bouées errantes, peut déterminer sa position en mesurant les pseudo-distances qui le séparent d'un certain nombre de bouées, ainsi que grâce à la connaissance de la position de chaque bouée qui est déterminée par chacune de celles-ci et qui est transmise au sous-marin par des signaux acoustiques.

Bien que le dispositif décrit dans ce dernier document permette à un engin sous-marin de déterminer sa position par rapport à un référentiel absolu, les systèmes de positionnement connus ne permettent pas un contrôle et une commande à distance d'un engin sous-marin autonome.

De plus les techniques présentées dans ce dernier document ne permettent pas un guidage fin et précis du véhicule compte-tenu du débit très important d'informations à transmettre par différents canaux acoustiques sous marins. Le dispositif décrit est de plus totalement indiscret à cause de la très grande quantité d'informations transmises au sous-marin.

Le problème posé consiste plus particulièrement à permettre la surveillance et la coordination à distance d'un ou plusieurs engins inhabités qui ont pour mission de se rendre dans une zone ou un ou plusieurs points d'objectif, par exemple pour une mission de mesure de paramètres physiques ou chimiques du milieu ou de relevé bathymétrique du fond sous-marin ou bien plus particulièrement pour des missions d'observation, de renseignements de sites terrestres ou maritimes situés à proximité d'une zone maritime déterminée, ou encore pour des missions de leurrage et de contre-mesures.

La solution au problème posé consiste à procurer un dispositif de contrôle et de commande à distance d'un ou plusieurs engins sous-marins inhabités, susceptible d'être utilisés pour des missions de renseignement notamment, et d'auto-positionnement de celui-ci, qui comporte au moins un, et de préférence au moins deux engins flottants inhabités mobiles, c'est-à-dire dérivants et/ou autopropulsés, comportant chacun au moins un premier récepteur de communication monodirectionnelle, par des premiers signaux radio-électriques, avec au moins un premier émetteur, tel qu'un satellite de positionnement faisant partie d'un réseau de satellite tel que le réseau GPS, chacun desdits engins flottants comportant au moins un émetteur récepteur de communication bidirectionnelle par des deuxièmes signaux radio-électriques, avec au moins un deuxième émetteur récepteur, par exemple tel qu'un satellite de messagerie faisant partie d'un réseau de satellites géostationnaires tel que le réseau INMARSAT ; ledit dispositif comporte en outre au moins un émetteur récepteur terrestre de communication bidirectionnelle par des troisième signaux radioélectriques, avec ledit deuxième émetteur récepteur tel qu'un satellite de messagerie ; chacun desdits engins flottants comporte au moins un émetteur récepteur ou transducteur de signaux acoustiques de données et de synchronisation et ledit engin sous-marin inhabité comporte au moins un émetteur récepteur ou transducteur de signaux acoustiques de données et de synchronisation compatibles avec ledit émetteur récepteur dudit engin flottant et dans lequel ledit engin sous-marin comporte au moins un récepteur de signaux de commande en provenance de l'engin flottant.

Alternativement, ledit premier émetteur de premiers signaux radioélectriques de positionnement desdits engins flottants peut être un émetteur terrestre tel que l'AXYLE; cette solution peut être particulièrement intéressante pour le contrôle et la commande à distance dudit engin sous-marin inhabité, à proximité des cotes, et peut être extrêmement précis; on peut alors prévoir dans ce cas d'utilisation, de corriger l'écart de position entre une antenne de surface permettant la réception desdits premiers signaux radioélectriques par ledit engin flottant et ledit transducteur par exemple acoustique de signaux de données et de synchronisation, compte-tenu des signaux délivrés par des capteurs de roulis, de tangage, de cap et de pilonnement installés à bord dudit engin flottant ; cette configuration peut permettre d'assurer un contrôle commande dudit engin sous-marin autonome inhabité dans un mode de navigation sous-marine "haute définition" (en abrégé NSM-HD).

Alternativement au système de messagerie par satellite, lesdits deuxième signaux radioélectriques peuvent faire partie d'un réseau de communication de surface permettant l'échange de données entre les bouées ou groupe de bouées et le ou les dispositifs de contrôle déportés tels que des engins flottants, des navires, ou des aéronefs.

Une telle configuration permet une gestion coordonnée particulièrement efficace de différents engins sous marins partiellement autonomes en bénéficiant de la vitesse de propagation extrêmement élevée des ondes radioélectriques au regard de la vitesse de propagation des ondes acoustiques sous marines .

Lesdits signaux de données et de synchronisation peuvent être échangés entre ledit engin flottant et ledit engin sous-marin autonome par l'intermédiaire par exemple desdits transducteurs de signaux acoustiques, ou alternativement par une liaison par fibres optiques débobinnée depuis ledit engin sous-marin et/ou ledit engin flottant, ou bien par une liaison par fil conducteur électrique gainé ou vernis également débobiné depuis ledit engin sous-marin et/ou ledit engin flottant.

Dans un mode particulier de réalisation, ledit engin flottant peut comporter une horloge de synchronisation basée sur la réception desdits premiers signaux radioélectriques émis par ledit premier émetteur tel qu'un satellite GPS.

Avantageusement ledit ou lesdits engins sous-marins comportent des moyens de retenue, d'amarrage ou de stockage, d'au moins un engin flottant, et comporte des moyens de libération, ou d'évacuation, dudit engin flottant.

La solution au problème posé consiste également à utiliser un dispositif selon l'invention par un procédé de contrôle et de commande à distance d'un engin sous-marin partiellement autonome inhabité et de positionnement de celui-ci qui comporte les opérations suivantes :

- on procure un dispositif selon l'invention,
- dans une opération d'enregistrement, on enregistre dans au moins une mémoire d'un calculateur dudit engin sous-marin des lois de comportement de l'engin selon différents mode de navigation et de préférence au moins un mode de suivi de trajectoire comportant les lois de pilotage en vitesse, cap et immersion en fonction du temps , de l'immersion, de l'altitude ou de la distance du véhicule à des obstacles sous-marins , préalablement au largage du dit engin ou bien par transmission dans le milieu marin par l'intermédiaire desdits deuxième et troisième signaux radioélectriques, qui sont transmis par le milieu marin par ledit transducteur dudit engin flottant,

- dans une opération d'émission on émet, de préférence à intervalles réguliers, dans le milieu sous-marin, des signaux acoustiques codés représentatifs des changements de mode de navigation ou des consignes de guidage du ou des engins sous marins.

- dans une opération de calcul, le calculateur embarqué desdits engins sous-marins génère à partir desdits signaux acoustiques émis par ledit ou lesdits engins flottants, les signaux de contrôle et de guidage correspondant au dernier mode de navigation reçu, et transmet par son transducteur une série d'impulsions acoustiques codées représentatives d'états ( cap, vitesse, immersion, altitude, ...) mesurés à bord .

Le procédé selon l'invention peut être avantageusement appliqué aux munitions intelligentes destinées à la neutralisation de mines ; cette utilisation, qui pourrait avantageusement utiliser le dispositif de navigation sous-marine "haute définition" rappelé ci-dessus, permettrait de s'affranchir d'auto-directeur acoustique (en anglais "forward looking sonar") ou optique (laser) de grande portée . La charge embarquée dans le robot sous-marin pourrait être mise à feu par simple proximité géographique dudit point objectif correspondant à une position vraisemblable d'une mine à neutraliser, laquelle position vraisemblable de mine peut être préalablement localisée avec précision par un sonar frontal ou latéral intégré sur un engin sous-marin mobile de reconnaissance utilisant le dispositif de l'invention.

En d'autres termes, l'invention consiste à mettre en oeuvre un procédé de contrôle et de commande à distance d'un engin sous-marin autonome inhabité et de guidage de celui-ci qui comporte les opérations suivantes :

- on procure un dispositif selon l'invention,
- on enregistre dans au moins une mémoire d'un calculateur dudit engin sous-marin au moins une position d'objectif à atteindre, et de préférence au moins une allure de trajectoire d'approche et au moins une position d'un point de départ ou de largage, préalablement au largage dudit engin sous-marin ou bien par transmission desdites positions et de ladite trajectoire par l'intermédiaire desdits deuxième et troisième signaux radioélectriques, qui sont transformés en signaux acoustiques et transmis dans le milieu marin audit engin sous-marin par ledit transducteur dudit engin flottant,

- on met en oeuvre un engin flottant, supplémentaire, source de signaux acoustiques de commande,
- on émet depuis un engin sous marin, de préférence à intervalles réguliers, dans le milieu sous-marin, des signaux acoustiques codés représentatifs d'états connus à bord et des signaux acoustiques de synchronisation représentatifs du temps par rapport à une origine de temps universel commune,
- on détermine en surface les coordonnées géographiques dudit engin sous marin,
- on transmet depuis la surface à un engin sous marin des ordres correctifs de guidage sur trajectoire.

Avantageusement un procédé selon l'invention comporte les opérations suivantes :

- On libère (ou on largue) de préférence à partir d'un engin habité flottant tel qu'un navire ou bien à partir d'un engin habité sous-marin, ledit engin sous-marin autonome, à un point de départ situé dans une première zone maritime et situé à une distance de ladite position d'objectif par exemple comprise entre 500 mètres et 500 km, de préférence comprise entre 10 et 200 km, par exemple voisine de 50 à 150 km,
- Lorsque ledit engin arrive dans une deuxième zone maritime séparée de ladite première zone maritime par une ligne de séparation, à une distance dudit point objectif de préférence inférieure à 10 km par exemple voisine de 1 à 10 km, on déclenche grâce à un programme enregistré dans une mémoire d'un calculateur dudit engin sous-marin autonome, le largage d'au moins un engin flottant de proximité préalablement amarré audit engin sous-marin autonome ou contenu dans celui-ci, en déclenchant lesdits moyens de libération dudit engin flottant, lequel engin flottant de proximité remonte à la surface et permet un positionnement précis dudit engin sous-marin autonome grâce audit premier satellite de positionnement, et permet le relais des communications bidirectionnelles entre ledit engin sous-marin autonome et une station terrestre de contrôle par l'intermédiaire dudit deuxième satellite de messagerie,
- Lorsque la mission de renseignement dudit engin sous-marin autonome est terminée, celui-ci se dirige vers une zone de rendez-vous de préférence située dans ladite première zone maritime, dans laquelle ont été largués ou dérivent ou naviguent au moins un par exemple deux desdits engins flottants qui permettent un positionnement précis dudit engin sous-marin autonome en un point de rendez-vous où celui-ci est récupéré par ledit engin habité flottant ou sous-marin.

Avantageusement, ledit engin sous-marin autonome détermine sa position grâce à un seul desdits engins flottants, en utilisant les opérations suivantes :

- Ledit engin sous-marin libère à un instant donné ledit engin flottant "Maître" dans lequel ont préalablement été téléchargés en mémoire les coordonnées théoriques du point de largage ainsi que les consignes de vitesse de cap et d'immersion de l'engin sous-marin;
- Ledit engin sous marin émet aux instants T1 et T2 des signaux de synchronisation,
- Ledit engin flottant "Maître" date les instants d'arrivée en surface des signaux émis à T1 et T2 et, en déduit les distances D1 et D2 à l'engin sous marin,
- Ledit engin flottant détermine par calcul à partir desdites distances (d1, d2) et desdits module (L) et orientation (C) du déplacement les coordonnées de deux points (A1; B1) correspondant à la possible position de l'engin sous marin,
- Ledit engin flottant détermine lequel desdits deux points (A1, B1) correspond à la position réelle, en fonction d'informations relatives à la position connue précédemment audit instant (t1).
- Ledit engin flottant transmet par le canal acoustique sous marin les informations de recalage du système de navigation à l'estime embarqué à bord de l'engin sous marin ou les nouvelles consignes de guidage.

Avantageusement, dans un procédé selon l'invention ledit engin sous-marin autonome détermine sa position en utilisant les opérations suivantes :

- ledit engin sous-marin détermine à l'aide des appareils embarqués qu'il comporte: son immersion, sa position approximative, le module (L) et l'orientation ou cap (C) du vecteur correspondant à son futur déplacement entre lesdits instants (t1) et (t2), ces informations étant inscrites dans la mémoire d'un engin flottant,
- ledit engin flottant détermine à un moment ou instant (t1) puis consécutivement à un moment ou instant (t2), une distance ou pseudo distance (d1), respectivement (d2), le séparant d'un engin sous marin grâce auxdits signaux acoustiques émis par ledit engin sous marin,
- ledit engin flottant détermine par calcul à partir desdites distances (d1, d2), dudit module (L) et de l'orientation (C) du déplacement les coordonnées de deux points (A1, B1) correspondant à la possible position de l'engin sous marin,
- ledit engin flottant détermine lequel desdits deux points (A1, B1) correspond à la position réelle de l'engin sous marin, en fonction d'informations préalablement stockées en mémoire,
- ledit engin flottant transmet audit engin sous marin les corrections de position.

Grâce à l'invention, il est possible de transmettre à très grande distance à partir d'une station de contrôle terrestre ou maritime flottante, des ordres ou informations à un ou plusieurs engins sous-marin autonome inhabité afin que ces engins se déplacent jusqu'à une zone ou un point d'objectif, dans lequel ils pourront identifier et localiser de façon très précise des phénomènes physiques ou objets à surveiller; l'invention permet également à l'engin sous-marin de rendre compte de sa mission de renseignement à un centre opérationnel situé à très grande distance, tout au long du déroulement de sa mission, et de décider des actions à entreprendre en fonction des ordres reçus ainsi que de rendre compte à distance de la bonne exécution des actions ou des ordres reçus.

Dans un mode préférentiel de réalisation du dispositif selon l'invention, celui-ci intègre un ou plusieurs engins sous-marin autonomes inhabités, plusieurs satellites défilants ou géostationnaires, au moins une station de contrôle commande déportée, et au moins un et de préférence plusieurs engins flottants tels que bouées, navires, engins libres autonomes de surface ou de subsurface.

Chacun desdits engins sous-marins autonomes de reconnaissance, peut par exemple être conformé comme une torpille et doté d'une propulsion électrique lui permettant par exemple de se déplacer à une vitesse de l'ordre de cinq noeuds à dix noeuds avec une autonomie de l'ordre de 5 heures à quelque jours ; chacun desdits engins autonomes sous-marin est équipé d'une horloge stabilisée en température, d'un émetteur récepteur acoustique et d'un calculateur séquenceur au moins.

En fonction des missions qui lui sont imparties et des modes de navigation il peut comprendre en outre un gyrocompas, un loch doppler, un capteur d'immersion ou de profondeur, un sonar frontal de détection d'obstacle, un altimètre et différents appareils de mesure ou d'enregistrement de renseignements recherchés tels que par exemple une caméra vidéo, un sonar latéral, un échosondeur, un dispositif d' écoute ; lors de l'exécution de la mission d'observation ledit engin sous-marin autonome pourra connaître sa postillon c'est-à-dire ses coordonnées géographiques (latitude et longitude) avec une précision variable en fonction des différentes phases de la mission, laquelle précision peut être de l'ordre de trois cents mètres lors des phases de ralliement d'un site objectif ou d'une zone de rendez-vous, et d'une précision plus grande par exemple de l'ordre de cinq à vingt cinq mètres lors de l'approche finale et du positionnement au point d'observation et au point de rendez-vous.

Par ailleurs ledit engin sous-marin autonome peut recevoir à tout moment des ordres pouvant influer sur le déroulement de sa mission et peut rendre compte audit poste terrestre de contrôle et de commande de son état, de sa position et des informations qu'il a recueillies.

Ledit engin sous-marin autonome est avantageusement équipé de moyens de réception de messages numériques codés par voie acoustique qui sont transmis par l'un des engins flottants de surface et qui peuvent contenir des informations de nature différentes telles que :

- commandes affectant la mission dudit engin sous-marin autonome,
- consignes de mode de navigation ou de guidage,
- demandes d'informations relatives à l'état dudit véhicule sous-marin autonome et/ou à l'exécution de sa mission de renseignement.

Ledit engin sous-marin autonome est de préférence doté de moyens de réception de signaux acoustiques émis depuis la surface de la mer par lesdits engins flottants à des instants prédéterminés et de préférence synchronisés par rapport à un temps universel.

Ledit engin sous-marin autonome est également doté de moyens d'émission de signaux acoustiques codés en temps-fréquence porteurs d'informations relatives à l'état de l'engin sous-marin, et de moyens d'émission de signaux acoustiques à des instants précis déterminés et de préférence synchronisés par rapport à un temps universel.

Le fonctionnement dudit engin sous-marin peut être effectué sous le contrôle d'un calculateur séquenceur assurant notamment les fonctions suivantes :

- analyse des signaux acoustiques reçus : décodage des trames, génération de l'ordre d'émission de l'accusé de réception, transfert au calculateur de bord de la consigne reçue,
- renvoi d'états : par voie acoustique aux requêtes d'informations, après interrogation du calculateur de bord,
- Gestion des modes de pilotage,
- gestion de la trajectoire de l'engin : envoi au calculateur de bord des consignes de vitesse, de cap, d'immersion, et d' attitude (roulis,tangage,lacet),
- la prise de décision en cas d'incidents,
- l'exécution d'une procédure de largage de bouées.

L'ensemble des moyens de communication spatiale est basé sur le déploiement de satellites défilants ou géostationnaires assurant trois grandes fonctions :

- Renseignement : il s'agit ici d'utiliser des satellites défilant d'observation, disposant de capteurs optique, radar, infrarouge, altimètres (Hélios, ...),
- Positionnement : typiquement la fonction des satellites des réseaux GPS ou GLOSNASS, qui permettent de positionner des mobiles sur la surface du globe terrestre avec une grande précision, et une récurrence de l'ordre de la seconde, par la réception de signaux codés émis par une "galaxie" de 22 satellites défilant assurant une couverture mondiale sans discontinuité dans le temps, ou l'espace,
- Messagerie : le dispositif basé sur l'utilisation de satellites de messagerie défilant ou géostationnaires permet d'assurer les télécommunications en temps "quasi-réel" entre la station de contrôle au sol et les engins flottants de surface.

C'est l'une des fonctions des satellites géostationnaires INMARSAT, dont la norme de transmission est le STANDARD "C".

Les moyens terrestres de contrôle et de commande comportent 4 sous-ensembles :

- l'infrastructure au sol de communication avec lesdits satellites plus particulièrement : les stations sol GPS, les stations sol INMARSAT, les stations sol du satellite de reconnaissance,
- une ou plusieurs stations de mesure GPS différentiel qui ont pour fonction d'améliorer la précision de positionnement des engins flottants mobiles de surface par une mesure au sol des dérives du système GPS,
- les réseaux terrestres de transmission de données tel que : réseau téléphonique commuté (RTC), réseau Transpac, réseau Numéris, réseau Militaire,
- un centre opérationnel qui comprend : des points d'accès aux réseaux numériques, des moyens de calcul, un ou plusieurs postes opérateur, des moyens de restitution de l'information (cartographie, trajectographie, impression d'images).

Dans certains cas, le support des moyens de contrôle commande pourra être pour des raisons opérationnelles un navire ou un aéronef déployé à proximité du théâtre d'opération, éventuellement inhabité.

Les moyens de relais de communication et de positionnement se composent d'un ou plusieurs engins flottants qui peuvent être :

- une bouée largable d'un aéronef, d'un bâtiment de surface, d'un engin sous-marin,
- un navire de surface,
- un engin libre autonome de surface ou sub-surface.

Lesdits engins flottants sont de deux types :

- un engin flottant "maître" comprend au moins un émetteur récepteur standard "C" de messagerie, un récepteur GPS de positionnement, une horloge, un émetteur récepteur acoustique, un processeur spécialisé de calcul et d'échange de données, un émetteur récepteur radio (en variante);
- un engin flottant "élémentaire" comprend un récepteur GPS, une horloge, un récepteur acoustique, un émetteur récepteur standard "C", un processeur spécialisé de calcul et d'échange de données, un émetteur radio (en variante).

Les fonctions assurées par ledit engin flottant "maître" sont :

- réception de sa propre position GPS en latitude en longitude, éventuel calcul de sa dérive en cap et en vitesse et de son attitude,
- réception des messages standard "C" ou radio de différents types : commandes destinées à l'engin sous-marin autonome, correction GPS différentiel, coordonnées des engins flottants voisins et datations des signaux acoustiques reçus, requêtes d'états flotteurs, requêtes d'états engins sous-marins,
- réception par canal acoustique de trames correspondant à des états de l'engin sous-marin,
- datation en temps universel des instants de détection des signaux acoustiques émis de façon synchrone par l'engin sous-marin,
- émission standard "C" de messages de type : états bouées ou engins flottants, états engin sous-marin, datation,
- Calcul local éventuel de la position de l'engin par des méthodes de détermination pseudo-distances et, corrections associées,
- émission acoustique : relayage des signaux d'ordres de commande vers l'engin sous-marin, transmission des requêtes, transmission de signaux synchrones.

Les fonctions de base du flotteur (engin flottant) élémentaire sont l'émission standard "C" ou radio de la position et attitude du flotteur et des datations de réception des signaux acoustiques.

Les capacités de transmission de données numériques du système INMARSAT en temps "quasi-réel" sont utilisées pour transmettre à la bouée les corrections de position à apporter au GPS (navigation en mode GPS-DIFFERENTIEL).

A bord de la bouée, la meilleure estime de sa position en latitude en longitude est calculée par application des corrections au point GPS délivré par le récepteur embarqué.

Le canal de transmission utilisé est un canal acoustique, mettant en oeuvre un transducteur immergé à une profondeur optimale, prenant en compte les conditions locales de bathycélérimétrie.

Le transducteur émet des signaux acoustiques constitués en trame d'informations ; ses principales caractéristiques sont :

- transducteur omnidirectionnel,
- émission de préférence en bande étroite ou spectre large bande,
- cycles synchronisés sur le temps universel,
- récurrence de transmission des trames fixe ou selon des cycles, pseudo-aléatoires (évasion temporelle),
- codage multispectral et redondance spatio-temporelle,
- codage permettant de calculer à la réception un indicateur de confiance (facteur de qualité de la transmission).

Le dispositif et le procédé selon l'invention peuvent avantageusement être utilisés pour recaler les dispositifs de navigation d'un sous-marin en plongée.

Les nombreux avantages procurés par l'invention, seront mieux compris au travers de la description suivante qui se réfère aux dessins annexés, qui illustrent sans aucun caractère limitatif, un mode préférentiel de réalisation d'un dispositif selon l'invention et de son procédé d'utilisation.

La figure 1 représente schématiquement les principaux composants d'un dispositif de contrôle et de commande à distance d'un engin sous-marin selon l'invention et son principe de fonctionnement.

La figure 2 illustre schématiquement les principaux constituant d'un engin flottant faisant partie d'un dispositif selon l'invention.

La figure 3 illustre schématiquement les principaux composants d'une station terrestre de contrôle faisant partie d'un dispositif selon l'invention.

La figure 4 illustre schématiquement les principaux composants des moyens de communication et de contrôle commande intégrés à un engin sous-marin autonome d'un dispositif selon l'invention.

La figure 5 illustre schématiquement des étapes d'un procédé d'utilisation d'un dispositif selon l'invention pour faire exécuter une mission de renseignement à un engin sous-marine autonome.

La figure 6 illustre schématiquement des étapes d'un procédé de positionnement d'un engin sous-marin utilisant des signaux transmis par un seul engin flottant d'un dispositif selon l'invention.

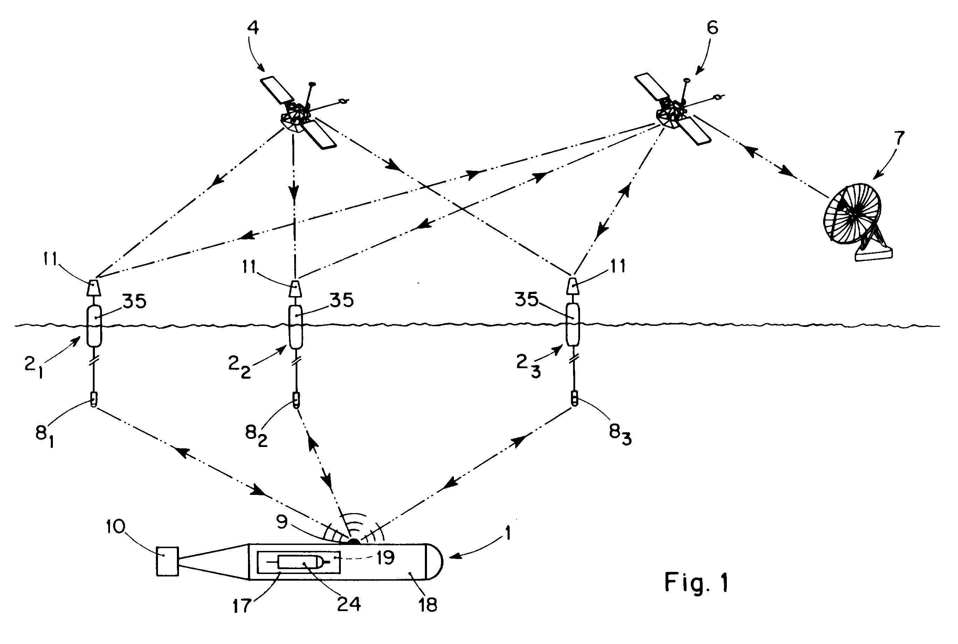

Par référence à la figure 1, est illustré un engin sous-marin 1 partiellement autonome doté de moyens de propulsion et de gouverne 10, dont la coque peut prendre la forme générale d'une torpille, qui comporte au moins un transducteur acoustique 9 lui permettant de communiquer c'est-à-dire d'émettre et de recevoir des signaux respectivement reçus ou émis par des engins flottants tels que des bouées $2_1$, $2_2$, $2_3$.

Avantageusement ledit engin sous-marin autonome comporte un espace ou moyen de stockage 19 à l'intérieur du corps ou de la coque 18, lequel espace de stockage 19 peut communiquer avec le milieu extérieur grâce à une trappe 17 qui peut être ouverte ou fermée en fonction d'ordres de commande reçus par ledit sous-marin autonome 1 ; ceci permet en fonction des ordres reçus et de la mission du sous-marin de libérer ou de larguer un engin flottant 24 préalablement disposé dans ledit espace 19 de stockage qui peut ainsi se détacher ou sortir dudit engin sous-marin 1 pour remonter à la surface et jouer son rôle de relais de communication entre ledit sous-marin et un satellite, notamment lorsque ledit sous-marin approche d'un point ou d'une situation géographique correspondant à l'objectif de sa mission.

Chacune desdites bouées $2_1$, $2_2$, $2_3$ comporte un flotteur 35 recevant dans sa partie supérieure une antenne 11, lui permettant de recevoir et/ou d'émettre des signaux radio-électriques, et ledit engin flottant ou bouée comporte également respectivement un transducteur ou émetteur récepteur de signaux acoustiques qui est repéré, $8_1$, $8_2$, $8_3$ respectivement.

Chacun desdits engins flottants ou bouées peut d'une part recevoir des signaux radioélectriques, émis par des satellites 4 de positionnement grâce auxquels un calculateur intégré à chacune des bouées pourra déterminer de façon précise la position de ladite bouée, de préférence à des intervalles de temps réguliers.

Chacune desdites bouées peut d'autre part recevoir et émettre des deuxièmes signaux radio-électriques à destination ou en provenance d'un deuxième satellite 6 de messagerie, ce qui permet la transmission par lesdits deuxièmes signaux radio-électriques d'ordres (c'est-à-dire d'informations représentatives d'ordres) de mission destinés audit engin sous-marin, ou dans un autre sens, d'informations relatives aux coordonnées de la bouée, à la datation d'arrivée de signaux acoustiques, à des états du sous-marin qui peuvent être ainsi transmises par l'intermédiaire dudit deuxième satellite 6 à une station terrestre de contrôle commande 7.

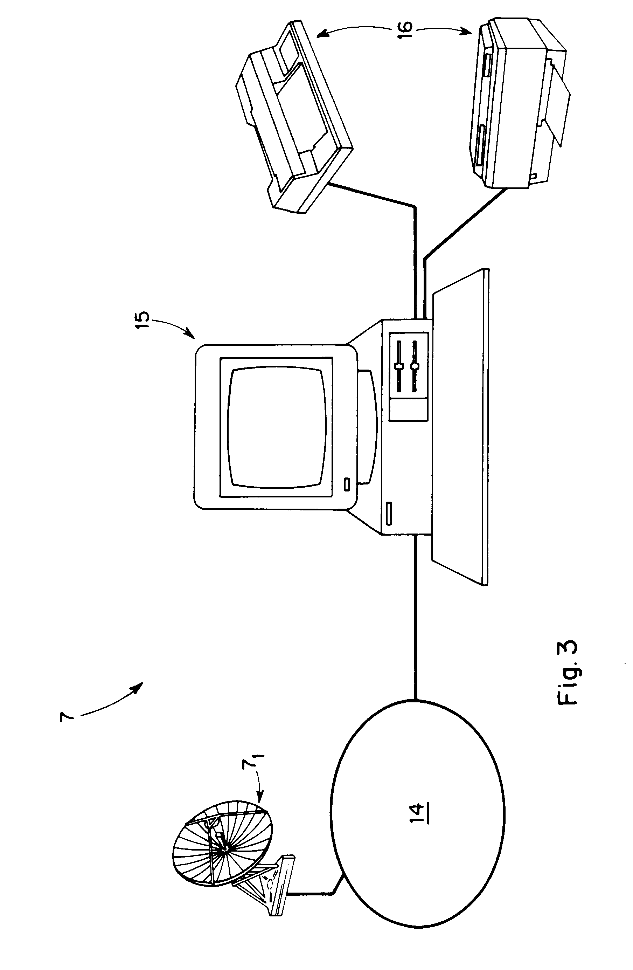

Par référence à la figure 3 on voit qu'avantageusement ladite station de contrôle commande 7 peut intégrer un émetteur récepteur $7_1$ de communication bidirectionnelle par des troisièmes signaux radio-électriques avec ledit satellite de messagerie (repère 6 de la figure 1) ; ladite station terrestre qui peut être reliée audit émetteur récepteur $7_1$ par un réseau de communication terrestre 14 de type réseau téléphonique ou réseau informatique, permet à un ordinateur 15 central de commande, de dialoguer avec ledit engin sous-marin ; ledit ordinateur central est de préférence relié à des périphériques 16 tels que tables traçantes ou imprimantes permettant d'éditer des rapports concernant l'état ou les communications établies c'est-à-dire émises ou reçues dudit engin sous-marin.

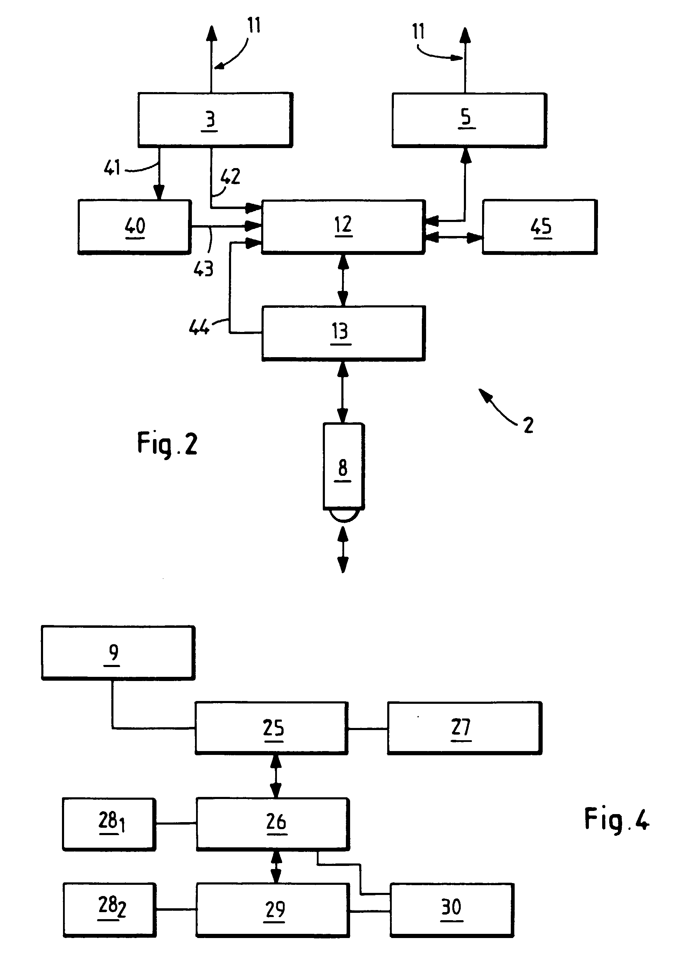

Par référence à la figure 2 on voit qu'un engin flottant comporte une antenne 11 au moins destinée à capter des signaux qui seront détectés et amplifiés et traités d'une part par un récepteur 3 desdits signaux radio-électriques de positionnement émis par lesdits satellites de positionnement . Une horloge 40 est synchronisée par la liaison 41. La détection par le processeur acoustique 13 de l'arrivée d'un signal acoustique provoque la lecture par le calculateur 12 à travers la liaison 42 de la position de la bouée, et provoque la lecture par ledit calculateur à travers la liaison 43 de la datation précise de cet instant d'arrivée, et à travers la liaison 44, la lecture du type d'impulsion reçue.

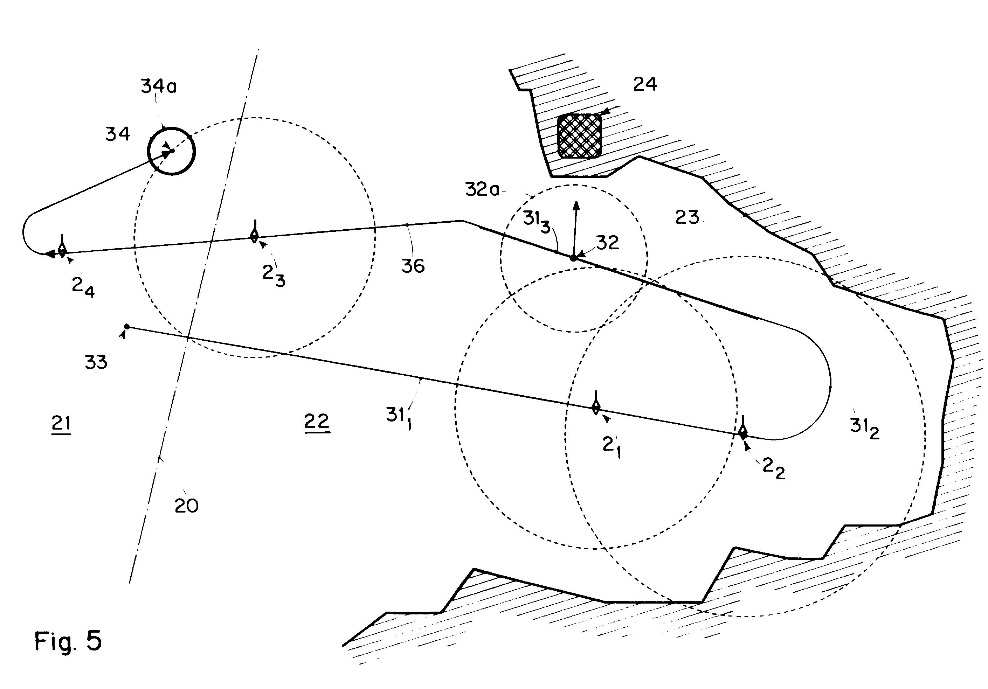

Par référence à la figure 4 on voit que ledit engin sous-marin autonome 1 comportant ledit transducteur acoustique 9 comporte avantageusement un processeur acoustique 25 susceptible de traiter les signaux à destination dudit transducteur 9 ou reçus par ledit transducteur 9, lesquels signaux peuvent être datés par une horloge à quartz 27 de grande précision. Un calculateur de bord 29 communique avec le processeur de conduite de mission 26 et interprète les ordres et directives de guidage reçues et gère les capteurs et actionneurs de l'engin selon lesdits modes de navigation pré-programmés. L'ensemble pouvant être alimenté par des batteries 30 ; avantageusement, chacun desdits processeurs 26 et 29 est relié à au moins une mémoire respectivement $28_1$, $28_2$ dans lesquelles sont enregistrées notamment lesdits modes de navigation et consignes de suivi de trajectoire.

Par référence à la figure 5 on voit que dans un mode particulier de mise en oeuvre du dispositif conformément à un procédé selon l'invention, on peut larguer ledit engin sous-marin (non représenté) en un point de départ 33 situé dans une zone maritime 21 pouvant correspondre par exemple à une zone d'eaux internationales, et séparée d'une deuxième zone maritime 22 correspondant par exemple à une zone d'eaux territoriales, lesquelles premières et deuxièmes zones sont séparées par une ligne 20 de séparation ou de démarcation.

Selon un mode particulier de réalisation d'une mission de renseignement effectuée par ledit engin sous-marin autonome, ledit engin se déplace tout d'abord dudit point de départ 33 à une zone objectif 32a en suivant une trajectoire prédéterminée et préalablement enregistrée dans une mémoire dudit engin sous-marin, ladite trajectoire comportant une partie rectiligne $31_1$ et une partie curviligne sensiblement en arc de cercle $31_2$ ; avantageusement avant d'arriver dans ladite zone objectif 32a, ledit engin sous-marin autonome peut larguer deux engins flottants : un engin flottant dit "Maître" $2_1$, un engin flottant dit "élémentaire" $2_2$, qui après être remontés à la surface lui permettent de recevoir des ordres de guidage très précis à l'intérieur de ladite zone objectif 32a, notamment en un point objectif 32 ; ledit engin sous-marin suit alors une trajectoire prédéterminée $31_3$ au cours de laquelle ledit engin sous-marin pourra par exemple faire surface, recaler sa navigation à l'estime à l'aide d'un récepteur GPS optionnel et effectuer des prises de vue d'un objectif sensible à surveiller 24 situé dans une zone côtière 23.

Après que ledit engin sous-marin autonome ait terminé sa mission et transmis les informations recueillies, par l'intermédiaire desdits moyens de transmission radio-électriques utilisant ledit satellite de messagerie, ledit engin sous-marin peut rejoindre une zone de rendez-vous 34a en suivant une trajectoire de retour 36, lequel sous-marin pourra se positionner de façon précise en un point de rendez-vous 34 situé dans ladite zone de rendez-vous 34a en utilisant deux autres engins flottants $2_3$ et 24.

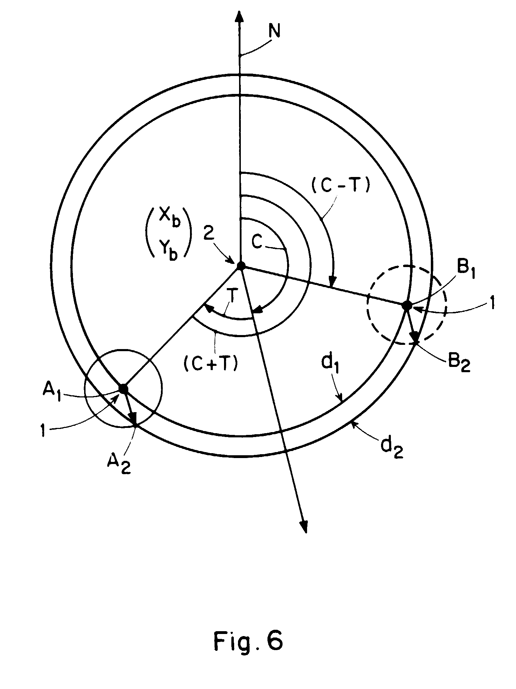

Par référence à la figure 6 dans un mode préférentiel de réalisation d'un procédé selon l'invention, ledit engin sous-marin 1 peut se positionner grâce aux signaux reçus et émis par un seul engin flottant "Maître" 2.

Ledit engin flottant 2 détermine les coordonnées xb et yb de sa position courante grâce auxdits signaux radioélectriques qu'il reçoit dudit satellite de positionnement.

Ledit engin flottant 2 détermine grâce à la datation desdits signaux acoustiques reçus dudit engin sous-marin 1, la distance dl le séparant dudit engin sous marin 1 à un instant t1 et détermine de la même manière la distance d2 le séparant dudit engin flottant à un instant consécutif t2.

Ledit engin flottant 2 connaît au moment du largage la position connue à l'estime, le module L et l'orientation ou cap C du déplacement programmé de l'engin et son immersion entre lesdits instants t1 et t2; la position dudit engin sous-marin 1 audit instant t1 comme indiqué à la figure 6, peut correspondre à l'un des points A1 et B1, situés sur un cercle ayant pour diamètre ladite distance d1, centré sur ledit engin flottant 2, correspondant aux repères A2 ou B2 respectivement audit instant t2, qui sont situés sur un cercle de diamètre égal à ladite distance d2 et centré sur ledit engin flottant.

Le repère C désignant le cap dudit engin sous-marin par rapport à l'axe N représentant le nord, le gisement desdits points A1 et B1 peut, comme représenté sur la figure 6, être déterminé à partir dudit cap C comme étant égal à (C + T) ou (C - T).

La détermination de l'angle T peut être faite par la formule :

$$Cos(T) = (d_2{}^2 - d_1{}^2 - L^2) / (2Ld_1)$$

Les coordonnées des points A1 et B1 peuvent alors être respectivement déterminés par les formules suivantes :

- XA1 = Xb + d1 Sin(C + T) + L Sin (C)

- YA1 = Yb + d1 Cos(C + T) + L Cos (C)

- XB1 = Xb + d1 Sin(C - T) + L Sin (C)

- YB1 = Yb + d1 Cos(C - T) + L Cos (C)

La position dudit engin sous-marin étant inconnue audit instant t1, il n'existe en effet que deux positions possibles correspondant au système d'équation ci-dessus, ce qui correspond à la solution du problème graphique consistant à positionner l'origine du vecteur déplacement sur un cercle de rayon d1, et l'extrémité dudit vecteur déplacement sur le cercle également centré sur la position dudit engin flottant et de diamètre d2 ; le levé de doute sur la position réelle dudit engin sous-marin entre lesdits points A1 B1 se fait par une connaissance à priori de la position dudit engin sous-marin grâce à des informations relatives à sa position précédemment déterminée.

Ces positions étant alors connues, la bouée maître transmet alors au dit engin sous-marin ses nouvelles directives de guidage.

Dans une application particulière d'un procédé selon l'invention, lesdits engins (dits "flottants") peuvent être disposés sous ou sur (et/ou rendus solidaires de) la banquise.

## Revendications

1. Dispositif de contrôle et de commande à distance d'un engin (1) sous-marin autonome inhabité et de positionnement de celui-ci, qui comporte au moins un engin flottant inhabité (2) dérivant et/ou autonome comportant au moins un premier récepteur (3) de premiers signaux radio électriques de positionnement en provenance d'au moins d'un premier émetteur (4) et au moins un transducteur (8) de signaux acoustiques de positionnement, lequel engin (1) sous marin comporte un transducteur compatible avec lesdits signaux acoustiques de positionnement, caractérisé en ce que :

   - ledit engin flottant (2) comporte au moins un émetteur récepteur (5) de communication bidirectionnelle avec au moins un deuxième émetteur récepteur (6) de deuxièmes signaux radioélectriques de messagerie, lequel dispositif comporte au moins un émetteur récepteur (7) terrestre de communication bidirectionnelle avec ledit deuxième émetteur récepteur (6) par des troisième signaux radioélectriques,
   - lequel transducteur (8) de l'engin flottant (2) est au moins un récepteur de signaux acoustiques de données et de synchronisation en provenance du transducteur (9) de l'engin sous marin (1) qui est au moins un émetteur compatible desdits signaux acoustiques de données et de synchronisation,
   - lequel engin sous marin (1) comporte au moins un récepteur de signaux de commande en provenance de l'engin flottant (2).

2. Dispositif selon la revendication 1 caractérisé en ce que ledit engin sous-marin (1) comporte des moyens d'amarrage d'au moins un engin flottant, et comporte des moyens de libération dudit engin flottant.

3. Dispositif selon l'une quelconque des revendications 1 à 2 caractérisé en ce que ledit émetteur (4) de premiers signaux radioélectriques de positionnement est essentiellement constitué par un ou plusieurs satellites.

4. Dispositif selon l'une quelconque des revendications 1 à 3 caractérisé en ce que ledit deuxième émetteur récepteur (6) de signaux radioélectriques de messagerie est essentiellement constitué par un satellite et/ou un réseau local radioélectrique.

5. Procédé de contrôle et de commande à distance d'un engin (1) sous-marin autonome inhabité et de guidage de celui-ci dans lequel des engins flottants (2) reçoivent des signaux radioélectriques de positionnement et comportent des transducteurs de signaux acoustiques sous marins caractérisé en ce qu'il comporte les opérations suivantes :

   - on procure un dispositif selon l'une quelconque des revendications 1 à 4 ;
   - on enregistre dans au moins une mémoire (28) d'un calculateur (26, 29) dudit engin sous-marin (1) au moins une position (32) d'objectif à atteindre, et de préférence au moins une allure de trajectoire d'approche (31) et au moins une position d'un point de départ (33) ou de largage, préalablement au largage dudit engin sous-marin ou bien par transmission desdites positions et de laditetrajectoire par l'intermédiaire desdits deuxième et troisième signaux radioélectriques, qui sont transformés en signaux acoustiques et transmis dans le milieu marin audit engin sous marin (1) par ledit transducteur dudit engin flottant;
   - on met en oeuvre un engin flottant supplémentaire, source de signaux acoustiques de commande,
   - on émet depuis ledit engin sous marin, de préférence à intervalles réguliers, dans le milieu sous-marin, des signaux acoustiques codés représentatifs d'états connus à bord et des signaux acoustiques de synchronisation représentatifs du temps par rapport à une origine de temps universel commune,
   - on détermine en surface les coordonnées géographiques dudit engin sous marin,
   - on transmet depuis la surface audit engin sous marin des ordres correctifs de guidage sur trajectoire.

6. Procédé selon la revendication 5 caractérisé en ce qu'il comporte les opérations suivantes :

   - on libère de préférence à partir d'un engin habité flottant ou sous-marin, ledit engin sous-marin autonome, à un point de départ (33) situé dans une première zone maritime (21) et situé à une distance de ladite position d'objectif par exemple comprise entre 500 m et 500 km,
   - lorsque ledit engin sous-marin arrive dans une deuxième zone maritime (22), à une distance dudit point d'objectif (32) de préférence inférieure à 10 km, on déclenche grâce à un programme enregistré dans une mémoire d'un calculateur dudit engin sous-marin autonome, le largage d'au moins un engin flottant de proximité préalablement amarré audit engin sous-marin autonome ou contenu dans celui-ci, en déclenchant lesdits moyens de libération dudit engin flottant, lequel engin flottant de proximité remonte à la surface et permet un positionnement précis dudit engin sous-marin autonome grâce audit premier émetteur de positionnement, et permet le relais des communications bidirectionnelles entre ledit engin sous-marin autonome et une station terrestre de contrôle par l'intermédiaire dudit deuxième émetteur récepteur de messagerie,

- lorsque la mission de renseignement dudit engin sous-marin autonome est terminée, celui-ci se dirige vers un zone de rendez-vous de préférence située dans ladite première zone maritime, dans laquelle ont été largués et/ou dérivent et/ou naviguent au moins un desdits engins flottants qui permettent un positionnement précis dudit engin sous-marin autonome en un point (34) de rendez-vous où celui-ci est récupéré par ledit engin habité flottant ou sous marin.

7. Procédé selon l'une quelconque des revendications 5 à 6 caractérisé en ce que ledit engin sous-marin autonome détermine sa position en utilisant les opérations suivantes :

- ledit engin sous-marin détermine à l'aide des appareils embarqués qu'il comporte: son immersion, sa position approximative, le module (L) et l'orientation ou cap (C) du vecteur correspondant à son futur déplacement entre lesdits instants (t1) et (t2), ces informations étant inscrites dans la mémoire d'un engin flottant (2),
- ledit engin flottant (2) détermine à un moment ou instant (t1) puis consécutivement à un moment ou instant (t2), une distance (d1), respectivement (d2), le séparant d'un engin sous marin (1) grâce auxdits signaux acoustiques émis par ledit engin sous marin,
- ledit engin flottant (2) détermine par calcul à partir desdites distances (d1, d2), dudit module (L) et de l'orientation (C) du déplacement les coordonnées de deux points (A1, B1) correspondant à la possible position de 1' engin sous marin (1),
- ledit engin flottant détermine lequel desdits deux points (A1, B1) correspond à la position réelle de l'engin sous marin, en fonction d'informations préalablement stockées en mémoire,
- ledit engin flottant (2) transmet audit engin sous marin (1) les corrections de position .

8. Procédé selon l'une quelconque des revendications 5 à 7 caractérisé en ce qu'il est utilisé pour la neutralisation de mines.

9. Procédé selon l'une quelconque des revendications 5 à 8 caractérisé en ce qu'il est utilisé pour recaler les dispositifs de navigation d'un sous-marin en plongée.

10. Procédé selon l'une quelconque des revendications 5 à 8 caractérisé en ce qu'il est utilisé pour coordonner plusieurs engins sous marins de mesure, contremesure ou d'intervention, et en ce que lesdits engins "flottants" sont solidaires de la banquise.

**Patentansprüche**

1. Vorrichtung zur Kontrolle und Fernsteuerung eines unabhängigen, unbemannten Unterwasser-Gerätes (1) und zu dessen Positionierung, die mindestens ein unbemanntes schwimmendes, ausgesetztes und/oder unabhängiges Gerät (2) umfaßt, das mindestens einen ersten Empfänger (3) von ersten, von mindestens einem ersten Sender (4) abgegebenen Hochfrequenz-Positionierungssignalen umfaßt und mindestens einen Transducer (8) für akustische Positionierungssignale, wobei das Unterwasser-Gerät (1) einen mit den akustischen Positionierungssignalen kompatiblen Transducer aufweist, dadurch gekennzeichnet, daß:

- das schwimmende Gerät (2) mindestens ein kombiniertes Sende- und Empfangsgerät (5) für bidirektionale Kommunikation mit mindestens einem zweiten Sender-Empfänger (6) für zweite Hochfrequenz-Nachrichtensignale aufweist, wobei die Vorrichtung mindestens einen terrestrischen Sender-Empfänger (7) für bidirektionale Kommunikation mit dem zweiten Sender-Empfänger (6) über dritte Hochfrequenzsignale umfaßt,
- der Transducer (8) des schwimmenden Geräts (2) mindestens ein Empfänger für vom Transducer (9) des Unterwasser-Geräts (1) abgegebene akustische Daten- und Synchronistions-Signale ist, welcher mindestens ein mit den akustischen Daten- und Synchronisations-Signalen kompatibler Sender ist,
- das Unterwasser-Gerät (1) mindestens einen Empfänger für die von dem schwimmenden Gerät (2) abgegebenen Steuersignale aufweist.

2. Vorrichtung nach Anspruch 1, dadurch gekennzeichnet, daß das Unterwasser-Gerät (1) Andockmittel für mindestens ein schwimmendes Gerät umfaßt und Mittel zur Freisetzung des schwimmenden Geräts aufweist.

3. Vorrichtung nach einem der Ansprüche 1 bis 2, dadurch gekennzeichnet, daß der Sender (4) der ersten Hochfrequenz-Positionierungssignale im wesentlichen aus einem oder mehreren Satelliten gebildet wird.

4. Vorrichtung nach einem der Ansprüche 1 bis 3, dadurch gekennzeichnet, daß der zweite Sender-Empfänger (6) der Hochfrequenz-Nachrichtensignale im wesentlichen aus einem Satelliten und/oder einem örtlichen Hochfrequenz-Funknetz gebildet wird.

5. Verfahren zur Kontrolle und Fernsteuerung eines unabhängigen, unbemannten Unterwasser-Geräts und zu dessen Lenkung, bei dem schwimmende Geräte (2) Hochfrequenz-Positionierungssignale empfangen und Transducer für akustische Unterwasser-Signale aufweisen, dadurch gekennzeichnet, daß es folgende Tätigkeiten umfaßt:

   - es wird eine Vorrichtung nach einem der Ansprüche 1 bis 4 bereitgestellt;
   - in mindestens einem Speicher (28) eines Rechners (26, 29) des Unterwasser-Geräts (1) wird mindestens eine zu erreichende Zielposition (32) gespeichert, und vorzugsweise mindestens ein Verlauf der Annäherungs-Trajektorie (31) und mindestens eine Position eines Ausgangs- oder Ausklinkpunkts (33) vor dem Ausklinken des Unterwasser-Geräts oder durch Übertragung der Positionen und der Trajektorie mittels der zweiten und dritten Hochfrequenzsignale, die in akustische Signale umgewandelt und durch den Transducer des schwimmenden Geräts unter Wasser an das Unterwasser-Gerät (1) übertragen werden;
   - ein zusätzliches schwimmendes Gerät wird in Betrieb genommen,
   - ausgehend von dem Unterwasser-Gerät werden, vorzugsweise in regelmäßigen Intervallen, unter Wasser codierte akustische Signale gesendet, die für die an Bord bekannten Konditionen repräsentativ sind, sowie akustische Synchronisations-Signale, die für die Zeit im Vergleich zu einer weltweit gemeinsamen Zeitquelle repräsentativ sind,
   - auf der Oberfläche werden die geographischen Koordinaten des Unterwasser-Geräts bestimmt,
   - von der Oberfläche aus werden dem Unterwasser-Gerät Korrekturbefehle für die Lenkung auf der Trajektorie übermittelt.

6. Verfahren nach Anspruch 5, dadurch gekennzeichnet, daß es folgende Tätigkeiten umfaßt:

   - vorzugsweise von einem bemannten schwimmenden Gerät oder Unterwasser-Gerät aus wird das unabhängige Unterwasser-Gerät an einem Ausgangspunkt (33) freigesetzt, der in einer ersten Meereszone (21) liegt und sich beispielsweise in einer Entfernung zwischen 500 m und 500 km von der Zielposition befindet,
   - wenn das Unterwasser-Gerät in einer zweiten Meereszone (22) ankommt, die sich vorzugsweise in einer Entfernung von weniger als 10 km vom Zielpunkt befindet, wird mittels eines in einem Speicher eines Rechners des unabhängigen Unterwasser-Geräts gespeicherten Programms das Ausklinken von mindestens einem in nächster Nähe schwimmenden Gerät ausgelöst, das vorher an dem unabhängigen Unterwasser-Gerät angedockt oder in diesem enthalten war, indem die Mittel zur Freisetzung des schwimmenden Geräts ausgelöst werden, wobei das in nächster Nähe schwimmende Gerät an die Oberfläche steigt und dank des ersten Positions-Senders eine präzise Positionierung des unabhängigen Unterwasser-Geräts ermöglicht, und mittels des zweiten Nachrichten-Sender-Empfängers die Relaisverbindung der bidirektionalen Kommunikationen zwischen dem unabhängigen Unterwasser-Gerät und einer terrestrischen Kontrollstation gestattet,
   - wenn die Aufklärungsmission des unabhängigen Unterwasser-Geräts beendet ist, setzt es sich in Richtung auf eine Treffpunktzone in Bewegung, die vorzugsweise in der ersten Meereszone liegt, in der mindestens eines der schwimmenden Geräte freigesetzt und/oder ausgebracht wurde und/oder navigiert, das eine präzise Positionierung des unabhängigen Unterwasser-Geräts an einem Treffpunkt (34) ermöglicht, an dem es von dem bemannten schwimmenden Gerät oder Unterwasser-Gerät wieder aufgenommen wird.

7. Verfahren nach einem der Ansprüche 5 bis 6, dadurch gekennzeichnet, daß das unabhängige Unterwasser-Gerät seine Position unter Einsatz folgender Tätigkeiten bestimmt:

   - das Unterwasser-Gerät umfaßt an Bord befindliche Apparate und bestimmt mit ihrer Hilfe: seine Tauchtiefe, seine ungefähre Position, den Modul (L) und die Ausrichtung oder den Kurs (C) des seiner zukünftigen Bewegung zwischen den Zeitpunkten (t1) und (t2) entsprechenden Vektors, wobei diese Informationen in den Speicher eines schwimmenden Geräts (2) eingetragen werden,
   - das schwimmende Gerät (2) bestimmt mittels der von dem Unterwasser-Gerät gesendeten akustischen Signale zunächst zu einem Moment oder Zeitpunkt (t1) und daran anschließend zu einem Moment oder Zeitpunkt (t2) eine Entfernung (d1) beziehungsweise (d2), die es von einem Unterwasser-Gerät (1) trennt,

- das schwimmende Gerät (2) bestimmt durch Berechnung anhand der Entfernungen (d1, d2), des Moduls (L) und der Ausrichtung (C) der Bewegung die Koordinaten von zwei Punkten (A1, B1), die der möglichen Position des Unterwasser-Geräts (1) entsprechen,
- das schwimmende Gerät bestimmt in Abhängigkeit von den vorher im Speicher gesammelten Informationen, welcher der beiden Punkte (A1, B1) der tatsächlichen Position des Unterwasser-Geräts entspricht,
- das schwimmende Gerät (2) überträgt die Positionskorrekturen zum Unterwasser-Gerät (1).

8. Verfahren nach einem der Ansprüche 5 bis 7, dadurch gekennzeichnet, daß es dazu eingesetzt wird, Minen unschädlich zu machen.

9. Verfahren nach einem der Ansprüche 5 bis 8, dadurch gekennzeichnet, daß es zur Neueinstellung der Navigationsvorrichtungen eines Unterseeboots in Tauchfahrt benutzt wird.

10. Verfahren nach einem der Ansprüche 5 bis 8, dadurch gekennzeichnet, daß es zur Koordinierung mehrerer Angriffs-, Gegenangriffs- oder Interventions-Unterseeboote benutzt wird, und dadurch, daß die "schwimmenden" Geräte mit dem Packeis einstückig sind.

**Claims**

1. Device for the monitoring and remote control of an unmanned autonomous underwater vehicle (1) and for the positioning thereof, which comprises at least one drifting and/or autonomous unmanned floating platform (2) comprising at least one first receiver (3) for first positioning radio signals from at least one transmitter (4) and at least one transducer (8) for acoustical positioning signals, said underwater vehicle (1) comprising a transducer compatible with said positioning acoustical signals, characterised in that :

- said floating platform (2) comprises at least one transmitter-receiver (5) for bidirectional communication with at least a second transmitter-receiver (6) of second navigation radio signals, said device comprising at least one land-based transmitter-receiver (7) for bidirectional communication with said second transmitter-receiver (6), via third radio signals,
- said transducer (8) of the floating platform (2) comprises at least one receiver for acoustical data and synchronisation signals from transducer (9) of the underwater vehicle (1), which is at least a compatible transmitter for said acoustical data and synchronisation signals,

- said underwater vehicle (1) comprises at least one receiver for control signals from the floating platform (2).

2. Device according to claim 1, characterised in that said underwater vehicle (1) comprises means for docking at least one floating platform and means for releasing said floating platform.

3. Device according to either claims 1 to 2, characterised in that said transmitter (4) of first, positioning radio signals consists essentially of one or more satellites.

4. Device according to any one of claims 1 to 3, characterised in that said second transmitter-receiver (6) for navigation radio signals consists essentially of one satellite or a local radio network.

5. Method for the monitoring and remote control of an unmanned autonomous underwater vehicle (1) and for guiding the same, wherein floating platforms (2) receive positioning radio signals and comprise transducer means for underwater acoustical signals, characterised in that it comprises the following operations :

- a device according to any one of claims 1 to 4 is procured,
- in at least one computer memory (28) of a computer (26, 29) of said underwater vehicle (1), at least one target position (32) to be hit, preferably at least one speed for the approach trajectory (31), and at least one position for a point of departure (33) or launch are recorded prior to the launch of said underwater vehicle, or these positions and trajectory are transmitted via the second and third radio signals, which are transformed into acoustical signals and transmitted into the marine environment to the underwater vehicle (1) by said transducer of said floating platform,
- a additional floating platform is put into action,
- from said underwater vehicle, coded acoustic signals representing the status known on board and acoustic synchronisation signals representing the time relative to a common origin of universal time are transmitted into the underwater environment, preferably at regular intervals,
- at the surface, the geographic coordinates of said underwater vehicle are determined,
- from the surface, corrective guidance instructions are transmitted to said underwater vehicle concerning its trajectory.

**6.** Method according to claim 5, characterised in that it comprises the following operations :

- said autonomous underwater vehicle is released, preferably from a manned floating or underwater vehicle, at a point of departure (33) located in a first maritime zone (21) and at a distance from the target position of 500 m to 500 km for example,
- when the underwater vehicle reaches a second maritime zone (22) at a distance from the target point (32) of preferably under 10 km, by means of a program recorded in a memory of a computer of the autonomous underwater vehicle, at least one proximity floating platform is launched, which was previously docked on the autonomous underwater vehicle or contained therein, by triggering the means for releasing said floating platform, which then rises to the surface and allows for precise positioning of the autonomous underwater vehicle by virtue of the first positioning transmitter, and permits the relay of the bidirectional communications between the autonomous underwater vehicle and a land-based monitoring station via the second navigation transmitter-receiver,
- when the reconnaissance mission of the autonomous underwater vehicle is complete, the underwater vehicle steers to a rendez-vous zone preferably located in the first maritime zone, in which at least one of said floating platforms were launched and/or are drifting and/or sailing, these floating platforms allowing for precise positioning of the autonomous underwater vehicle at a rendez-vous point (34) where it is recovered by the manned floating or submarine vessel.

**7.** Method according to either of claims 5 to 6, characterised in that the autonomous underwater vehicle determines its position by using the following operations :

- the underwater vehicle determines by means of its on-board apparatus its submersion, its approximate position, the module (L) and orientation or course (C) of the vector corresponding to its future displacement between the instants (t1) and (t2), these data being entered into the memory of a floating platform (2),
- said floating platform (2) determines at one moment or instant (t1), then consecutively at a moment or instant (t2) a distance (d1) or (d2), respectively, separating it from an underwater vehicle (1) by means of the acoustic signals transmitted by said underwater vehicle,
- said floating platform (2) determines, by calculating from said distances (d1, d2), module (L) and the orientation (C) of the displacement, the coordinates of two points (A1, B1) corresponding to the possible position of the underwater vehicle (1),
- the floating platform determines which of the two points (A1, B1) corresponds to the real position of the underwater vehicle on the basis of data previously stored in its memory,
- said floating platform (2) transmits to the underwater vehicle (1) the position correction data.

**8.** Method according to any one of claims 5 to 7, characterised in that it is used for neutralising mines.

**9.** Method according to any one of claims 5 to 8, characterised in that it is used to confirm the position of navigation devices of a submerged submarine.

**10.** Method according to any one of claims 5 to 8, characterised in that it is used to coordinate a plurality of underwater vehicles for measure, counter-measure or intervention, and in that the "floating" vessels are rigidly connected to the ice-floe.

Fig. 1

EP 0 676 056 B1

Fig.2

Fig.4

Fig. 3

Fig. 5

Fig. 6